Europäisches Patentamt

European Patent Office

Office européen des brevets

(19)

(11) Veröffentlichungsnummer : **0 129 259**
**B1**

(12) **EUROPÄISCHE PATENTSCHRIFT**

(45) Veröffentlichungstag der Patentschrift :
**19.08.87**

(21) Anmeldenummer : **84200470.7**

(22) Anmeldetag : **03.04.84**

(51) Int. Cl.⁴ : **B 01 J 20/20**, C 02 F 1/28,
C 02 F 1/52

(54) **Aktivkohleprodukt.**

(30) Priorität : **29.04.83 DE 3315508**
**17.12.83 DE 3345792**

(43) Veröffentlichungstag der Anmeldung :
**27.12.84 Patentblatt 84/52**

(45) Bekanntmachung des Hinweises auf die Patenterteilung : **19.08.87 Patentblatt 87/34**

(84) Benannte Vertragsstaaten :
**DE FR GB IT NL**

(56) Entgegenhaltungen :
**CH-A- 625 425**
**DE-A- 2 440 379**
**US-A- 3 252 899**
**US-A- 4 292 176**

(73) Patentinhaber : **LABORATORIUM FÜR ADSORP-**
**TIONSTECHNIK GMBH**
**Gwinnerstrasse 27/33**
**D-6000 Frankfurt am Main (DE)**

(72) Erfinder : **Lotz, Walter**
**Burgstrasse 90**
**D-6000 Frankfurt am Main 60 (DE)**
Erfinder : **Tüffers, Günter**
**Georg-Speyer-Strasse 92**
**D-6000 Frankfurt am Main 90 (DE)**
Erfinder : **Winkler, Helmut, Dr.**
**Morgensternstrasse 11**
**D-6073 Egelsbach (DE)**
Erfinder : **Wirth, Johann, Dr.**
**Eifelweg 7**
**D-6868 Bad Vilbel (DE)**

(74) Vertreter : **Rieger, Harald, Dr.**
**Reuterweg 14**
**D-6000 Frankfurt am Main (DE)**

**Beschreibung**

Die Erfindung betrifft ein Aktivkohleprodukt für die Reinigung und Klärung von Wasser oder überwiegend aus Wasser bestehenden Flüssigkeiten.

Es ist bekannt, pulverförmige Aktivkohle zur Reinigung von Flüssigkeiten, z. B. von Lösungen in der chemischen Industrie, in der Lebensmittelindustrie oder aber auch zur Reinigung von Trinkwasser oder Abwasser einzusetzen. Hierbei macht man sich die Tatsache zunutze, daß die Adsorptionsgeschwindigkeit bei pulverförmigen Kohlen viel größer ist als bei sogenannten Kornkohlen, weil die Adsorptionsgeschwindigkeit im allgemeinen etwa der äußeren Oberfläche proportional bzw. dem Quadrat des Korndurchmessers umgekehrt proportional ist. Der Nachteil der Pulverkohle-Anwendung besteht jedoch darin, daß eine Abtrennung von der behandelten Flüssigkeit durch Sedimentation oder Filtration erforderlich ist. Insbesondere die sehr feinen Kornanteile unter 10 μm Korndurchmesser sedimentieren langsam oder erfordern besondere Maßnahmen bei der Filtration. Der schwer sedimentierbare oder filtrierbare Feinanteil der Aktivkohle ist aber meistens in seiner Adsorptionsleistung besonders aktiv. Die Menge dieses Anteils hängt von verschiedenen Bedingungen der Herstellung, wie z. B. vom Mahlvorgang, vom verwendeten Rohmaterial usw., ab. Gerade sehr gute hochaktive Kohlen haben oftmals diese bei der Anwendung hinderlichen Eigenschaften.

Es ist auch bekannt, die Sedimentation durch Zugabe von Hilfsmitteln zu erleichtern. Dies erfordert jedoch die Dosierung eines Hilfsmittels und damit einen zusätzlichen Arbeitsgang. Man kann z. B. die Sedimentation von Feststoffpartikeln durch Dosierung von Eisen-III-Chlorid, Polyaluminiumchlorid, Aluminiumsulfat oder von organischen Flockungsmitteln verbessern. Es wäre jedoch erwünscht, diesen Dosierungsschritt einzusparen.

Der Erfindung liegt die Aufgabe zugrunde, aus einer feinpulverigen Aktivkohle ein anwendungstechnisch leicht handhabbares Produkt zu machen, das ohne zusätzliche Maßnahmen einer zu reinigenden wäßrigen Lösung zugesetzt werden kann, nach dem Verrühren schnell sedimentiert und leicht abfiltrierbar ist. Erfindungsgemäß wird dies dadurch erreicht, daß das Aktivkohleprodukt aus einem Gemisch aus pulverförmiger Aktivkohle und Flockungsmittel auf anionischer oder kationischer Polyacrylamid-Basis besteht, wobei der Anteil des Flockungsmittels im Gemisch 0,005 bis 10 Gew.% beträgt. Um Flockungsmittel zu sparen, begrenzt man dessen Anteil im Aktivkohleprodukt vor allem beim Einsatz zum Verbessern der Filtrierbarkeit auf höchstens etwa 0,5 Gew.%. Es wurde gefunden, daß andere Flockungsmittel, wenn sie mit der pulverförmigen Aktivkohle gemischt sind, ihre Wirksamkeit verlieren. So wirkt $FeCl_3$ nur dann als das bekannt gute Flockungsmittel, wenn es gesondert der trüben Lösung zudosiert wird. Flockungsmittel auf Stärkebasis haben, auch wenn sie gesondert zugesetzt werden, für die sehr feinkörnige Aktivkohle nur eine sehr mäßige sedimentierende Wirkung.

Für das Aktivkohleprodukt eignen sich auch pulverförmige Aktivkohlen, bei denen mindestens 5 Gew.% aus Feinkorn mit einer Korngröße von höchstens 10 μm bestehen. Es ist möglich, daß dieser Feinkornanteil mindestens 20 Gew.% beträgt.

Das im gebrauchsfertigen Aktivkohleprodukt enthaltene Flockungsmittel kann zu mindestens 10 Gew.% aus Acrylamid-Copolymer bestehen. Das Acrylamid-Copolymer kann 10 bis 30 Mol.% (bezogen auf Gesamtmonomere) anioaktive Gruppen, wie etwa Carboxylgruppen, z. B. Acrylsäure, enthalten. Auch kann das Acrylamid-Copolymer mindestens 10 Mol.% (bezogen auf Gesamtmonomere) an kationaktiven Gruppen, wie z. B. aniongruppenhaltige Acrylsäureester enthalten.

## Beispiel 1

Zur Untersuchung des Sedimentationsverhaltens wird eine extrem fein gemahlene Aktivkohle verwendet, die einen Feinkornanteil von 30 Gew.% kleiner 10 μm besitzt und normalerweise sehr schwer absetzbar bzw. filtrierbar ist. Diese Aktivkohle wird mit verschiedenen Flockungsmitteln gemischt. Nach einer Lagerungszeit von 8 bis 10 Tagen werden mit den fertiggestellten Mischungen Versuche durchgeführt. Die hierzu verwendete Apparatur besteht aus einem Reihenrührgerät, wobei für alle Versuche die gleiche Rührgeschwindigkeit eingestellt wird.

In zylindrischen Glasgefäßen wird je 1 Liter Leitungswasser vorgelegt. Sodann werden von den verschiedenen Aktivkohle-Mischungen jeweils 100 mg/l in die vorgelegte Wassermenge eingetragen. Zum Vergleich wird in einem Gefäß ein Parallelversuch mit Aktivkohle ohne Flockungsmittel durchgeführt. Nach dem Eintragen der Aktivkohlemischungen wird 1 Min. lang mit ca. 300 UpM, dann 5 Min. lang mit 60 UpM gerührt. Danach werden die Rührer hochgezogen und das Absitzen der Suspension beobachtet. Folgende Flockungsmittel wurden verwendet :

A = $FeCl_3 \cdot 6H_2O$
B = $Al_2(SO_4) \cdot 18H_2O$
C = Wisprofloc (Stärkebasis)
D = Hydropur 2463 (nichtionische Polyacrylamid-Basis)
E = Synthofloc 8031 N/DS (anionisches Acrylamid-Acrylsäure-Copolymer)
F = Synthofloc 80 K (kationisches Acrylamid-Copolymer mit aminogruppenhaltigem Acrylsäureester als Comonomer)

Die Versuche erbrachten folgende Ergebnisse :

1. Versuch mit Flockungsmittel A, wobei dessen Anteil im Aktivkohleprodukt 25 Gew.% beträgt : Keine Flockung, die überstehende Flüssigkeit zeigt eine starke Trübung.

2. Versuch mit Flockungsmittel B, wobei dessen Anteil im Aktivkohleprodukt 10 Gew.% beträgt : Sehr schlechte Flockung, überstehende Flüssigkeit ist trüb.

3. Versuche mit Flockungsmittel C, wobei dessen Anteile im Aktivkohleprodukt zuerst 2, dann 5 und schließlich 10 Gew.% betragen : mäßige Flockung, überstehende Flüssigkeit ist trüb.

4. Versuche mit Flockungsmittel D, wobei dessen Anteile im Aktivkohleprodukt zuerst 1 und dann 5 Gew.% betragen : sehr schlechte Flockung, überstehende Flüssigkeit ist trüb.

5. Versuche mit Flockungsmittel E, wobei dessen Anteile im Aktivkohleprodukt zuerst 0,1 und dann 0,5 Gew.% betragen : sehr gute Flockung, überstehende Flüssigkeit ist völlig klar.

6. Versuche mit Flockungsmittel F, wobei dessen Anteile im Aktivkohleprodukt zuerst 1 und dann 6 Gew.% betragen : gute Flockung, überstehende Flüssigkeit nur schwach trüb.

7. Vergleichsversuch mit Aktivkohle ohne Flockungsmittel : Nach 3 Stunden Standzeit nur teilweises Absitzen ; in der überstehenden Flüssigkeit starke schwarze Trübung.

Die Anteile der Flockungsmittel im Aktivkohleprodukt wurden so gewählt, daß bei dessen Anwendung in der Lösung etwa die von den Herstellern der Flockungsmittel empfohlenen Konzentrationen vorliegen.

Wie man aus den Versuchen entnehmen kann, eignen sich die Flockungsmittel E und F zur Lösung der eingangs erläuterten Aufgabenstellung am besten. Nur mit den Mitteln E und F ist es möglich, durch Vermischen mit feinpulveriger Aktivkohle ein Produkt herzustellen, das nach dem Eintragen in eine wäßrige Lösung nach kurzem Rühren flockt und einwandfrei sedimentiert, so daß in kurzer Zeit die überstehende Flüssigkeit völlig klar ist.

## Beispiel 2

Das Filtrationsverhalten des Aktivkohleprodukts wird in einem Filtrationstest geprüft, bei welchem eine Suspension pro Liter mit 2,5 g Aktivkohleprodukt in Wasser mit einer konstanten Geschwindigkeit von 35 l/dm$^2 \cdot$ h über ein mit handelsüblichem Filtertuch bespanntes Filter gepumpt wird. Durch den sich bildenden Filterkuchen steigt der Druck allmählich an. Sobald ein Vordruck von 3 bar erreicht ist, wird der Versuch beendet ; die bis dahin durchgesetzte Flüssigkeitsmenge gilt als Maß für das Filtrationsverhalten des Aktivkohleprodukts.

Es wurden je 4 Versuche mit den Aktivkohlen Carboraffin AE und Carboraffin AP, beide von Bayer AG, Leverkusen, durchgeführt. Im 1. Versuch enthielt das Aktivkohleprodukt 0,01, im 2. Versuch 0,06, im 3. Versuch 0,1 Gew.% Synthofloc 8031 N/DS und im 4. Versuch zum Vergleich kein Flockungsmittel.

Ergebnisse

A) mit Carboraffin AE :

1. Versuch : durchgesetzte Wassermenge 4,5 l
2. Versuch : durchgesetzte Wassermenge 6,6 l
3. Versuch : durchgesetzte Wassermenge 5,25 l
4. Versuch : durchgesetzte Wassermenge 2,4 l

B) mit Carboraffin AP :

1. Versuch : durchgesetzte Wassermenge 6,0 l
2. Versuch : durchgesetzte Wassermenge 6,6 l
3. Versuch : durchgesetzte Wassermenge 5,85 l
4. Versuch : durchgesetzte Wassermenge 3,0 l

Auch der jeweils geringste Gehalt an Flockungsmittel im Aktivkohleprodukt ergab gegenüber der flockungsmittelfreien Aktivkohle eine beträchtliche Verbesserung der Filtrierbarkeit der Lösung.

## Beispiel 3

Es wurde ein Sedimentationsversuch unter den im Beispiel 1 genannten Bedingungen durchgeführt. Im Aktivkohleprodukt wurde die Aktivkohle Carboraffin A von Bayer AG verwendet. Das Sedimentationsverhalten wurde visuell beurteilt. Das Produkt enthielt Zusätze von 0,002, 0,005, 0,01, 0,02, 0,03, 0,05 und 0,1 Gew.% Synthofloc 8031 N/DS. Zum Vergleich wurde dieselbe Aktivkohle ohne Flockungsmittel eingesetzt. Es wurde gefunden, daß das Aktivkohleprodukt bei einem Flockungsmittelgehalt von 0,01 bis

**0 129 259**

0,1 Gew.% eine völlig einwandfreie Sedimentation bei praktisch klarem Überstand bewirkt. Auch bei einem Flockungsmittelzusatz von 0,005 Gew.% war noch gegenüber der Aktivkohle ohne Flockungsmittel eine gute Verbesserung der Sedimentation festzustellen. Bei 0,002 Gew.% Flockungsmittelzusatz war eine Verbesserung des Sedimentationsverhaltens gegenüber der Aktivkohle ohne Flockungsmittel gerade noch feststellbar.

**Patentansprüche**

1. Aktivkohleprodukt für die Reinigung und Klärung von Wasser oder überwiegend aus Wasser bestehenden Flüssigkeiten, dadurch gekennzeichnet, daß es aus einem Gemisch aus pulverförmiger Aktivkohle und Flockungsmittel auf anionischer oder kationischer Polyacrylamid-Basis besteht, wobei der Anteil des Flockungsmittels im Gemisch 0,005 bis 10 Gew.% beträgt.

2. Produkt nach Anspruch 1, dadurch gekennzeichnet, daß mindestens 5 Gew.% der pulverförmigen Aktivkohle aus Feinkorn mit einer Korngröße von höchstens 10 μm bestehen.

3. Produkt nach Anspruch 1 oder einem der folgenden, dadurch gekennzeichnet, daß das Flockungsmittel zu mindestens 10 Gew.% aus Acrylamid-Copolymer besteht.

4. Produkt nach Anspruch 1 oder einem der folgenden, dadurch gekennzeichnet, daß das Flockungsmittel 10 bis 30 Mol% (bezogen auf Gesamtmonomere) anionaktive Gruppen enthält.

5. Produkt nach einem der Ansprüche 1 bis 3, dadurch gekennzeichnet, daß das Flockungsmittel mindestens 10 Mol.% (bezogen auf Gesamtmonomere) an kationaktiven Gruppen enthält.

**Claims**

1. An activated carbon product for purifying and clarifying water or predominantly aqueous liquids, characterized in that the activated carbon product consists of a mixture of activated carbon powder and a flocculant which contains an ionic or cationic polyacrylamide, and the content of the flocculant in the mixture amounts to 0.005 to 10 % by weight.

2. A product according to claim 1, characterized in that the activated carbon powder contains at least 5 wt.% fines having a particle size up to 10 μm.

3. A product according to claim 1 or 2, characterized in that the flocculant contains at least 10 wt.% acrylamide copolymer.

4. A product according to claim 1 or either of the following claims, characterized in that the flocculant contains 10 to 30 mole percent (related to total monomer content) anionic groups.

5. A product according to any of claims 1 to 3, characterized in that the flocculant contains at least 10 mole percent (related to toal monomer content) cationic groups.

**Revendications**

1. Produit à base de charbon actif pour l'épuration et la clarification de l'eau ou de liquides constitués principalement d'eau, caractérisé en ce qu'il est constitué d'un mélange de charbon actif pulvérulent et d'agent de floculation à base de polyacrylamide anionique ou cationique, la proportion de l'agent de floculation dans le mélange représentant de 0,005 à 10 % en poids.

2. Produit suivant la revendication 1, caractérisé en ce qu'au moins 5 % en poids du charbon actif pulvérulent est constitué de grains fins ayant une granulométrie de 10 microns au plus.

3. Produit suivant la revendication 1 ou l'une des suivantes, caractérisé en ce que l'agent de floculation est constitué pour au moins 10 % en poids d'un copolymère d'acrylamide.

4. Procédé suivant la revendication 1 ou l'une des suivantes, caractérisé en ce que l'agent de floculation contient de 10 à 30 % en mole (rapporté aux monomères dans leur ensemble) de groupes à activité anionique.

5. Procédé suivant l'une des revendications 1 à 3, caractérisé en ce que l'agent de floculation contient au moins 10 % en mole (rapporté aux monomères dans leur ensemble) de groupes à activité cationique.

4